# EUROPEAN PATENT SPECIFICATION

(11) **EP 3 358 767 B1**
(45) Date of publication and mention of the grant of the patent: **07.10.2020**
(21) Application number: 16858813.5
(22) Date of filing: 17.08.2016
(51) Int. Cl.: H04J 14/04, H04J 14/02, H04B 10/2507, H04B 10/2581

(54) **DEVICE AND METHOD FOR PROCESSING LIGHT SIGNAL**
VORRICHTUNG UND VERFAHREN ZUM VERARBEITEN VON LICHTSIGNALEN
DISPOSITIF ET PROCÉDÉ POUR TRAITER UN SIGNAL DE LUMIÈRE

(30) Priority: 29.10.2015 CN 201510724181
(43) Date of publication of application: 08.08.2018
(73) Proprietor: Huawei Technologies Co., Ltd., Longgang District Shenzhen, Guangdong 518129 (CN)
(72) Inventor: JI, Ruiqiang, Shenzhen Guangdong 518129 (CN); FU, Shengmeng, Shenzhen Guangdong 518129 (CN); SONG, Xiaolu, Shenzhen Guangdong 518129 (CN); CHEN, Wei, Shenzhen Guangdong 518129 (CN)
(74) Representative: Gill Jennings & Every LLP
(86) International application number: PCT/CN2016/095682
(87) International publication number: WO 2017/071376

(56) References cited:
- EP-A1- 2 597 792
- EP-A1- 2 645 609
- CN-A- 1 571 307
- CN-A- 1 734 988
- US-A1- 2005 058 397
- US-A1- 2006 139 737
- US-A1- 2009 162 066
- US-A1- 2013 236 195

## Description

### TECHNICAL FIELD

Embodiments of the present invention relate to the optical communication field, and more specifically, to an apparatus and a method for processing an optical signal.

### BACKGROUND

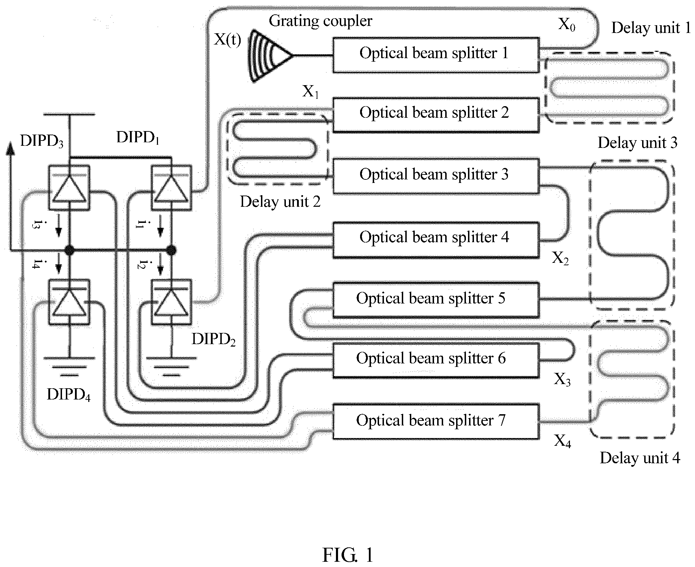

In an optical communications system, optical signal distortion or impairment may cause a system errorless working tolerance to be reduced, thereby affecting normal working of the system. In the prior art, a feed forward equalizer (FFE) may be used to compensate or equalize an optical signal. An FFE in FIG. 1 is used as an example below to briefly describe a process of compensating or equalizing an optical signal in the prior art. As shown in FIG. 1, the FFE includes a grating coupler, a delay unit, an optical beam splitter, and a double input photodiode detector (DIPD). A process of processing an optical signal by the FFE is described in detail below.

An optical signal X(t) in which intersymbol interference exists is input from the grating coupler. The optical signal X(t) is then split into two beams after entering an optical beam splitter 1, and a component X₀ is directly received by a DIPD₁. After being delayed by a delay unit 1, a remaining optical signal is split into two beams by an optical beam splitter 2, and a component X₁ is received by a DIPD₂. After being delayed by a delay unit 2, a remaining optical signal is split into two beams by an optical beam splitter 3, and a component X₂ is routed by an optical beam splitter 4 and enters the DIPD₁ or the DIPD₂. After being delayed by a delay unit 3, a remaining optical signal is split into two beams by an optical beam splitter 5, and a component X₃ is routed by an optical beam splitter 6 and enters a DIPD₃ or a DIPD₄. After being delayed by a delay unit 4, a component X₄ is routed by an optical beam splitter 7 and enters the DIPD₃ or the DIPD₄. In FIG. 1, because the DIPD₂ and the DIPD₄ are grounded, and a bias voltage is applied to the DIPD₁ and the DIPD₃, symbols of current signals i₁ and i₃ obtained by respectively converting optical components by the DIPD₁ and the DIPD₃ are positive, and symbols of current signals i₂ and i₄ obtained by respectively converting optical components by the DIPD₂ and the DIPD₄ are negative. In this way, a finally output current is a current obtained by subtracting a sum of current values of the DIPD₂ and the DIPD₄ from a sum of current values of the DIPD₁ and the DIPD₃.

The equalizer may gradually split an optical signal into a plurality of optical components by using a plurality of optical beam splitters, perform delay processing on these optical components by using delay units, separately convert a plurality of optical components obtained by using delay processing into current signals by using photodiode detectors, and superimpose the plurality of current signals to obtain a superimposed current signal. In this way, the initially input optical signal is converted into the current signal, so that the optical signal is compensated or equalized. However, superimposition can be performed only after the equalizer first performs delay processing on the optical components and then converts the optical components into the current signals. It may be learned that the equalizer cannot superimpose the optical components in an optical domain, but need to separately convert the optical components into the current signals before superimposition can be performed. Therefore, when there are a relatively large quantity of optical components, a relatively large quantity of high-speed photodiode detectors are also required. As high-speed devices increase, device costs are increased, and a structure of the equalizer becomes relatively complex, for example, design of an optical waveguide or a chip of the high-speed photodiode detector becomes more complex. In addition, because the plurality of high-speed photodiode detectors are connected in parallel, overall electrical bandwidth of the equalizer is reduced, which is unfavorable to optical signal processing.

US20130236195 discloses an optical feed forward equalizer.

EP2645609 discloses mode division multiplexing.

EP2597792 discloses multimode processing.

### SUMMARY

Embodiments of the present invention provide an apparatus and a method for processing an optical signal, so as to superimpose a plurality of optical components in an optical domain, and reduce a quantity of photodiode detectors.

According to a first aspect, an apparatus for processing an optical signal is provided, including: an optical beam splitter, configured to perform beam splitting processing on the optical signal to obtain a plurality of optical components; an optical delay unit, configured to perform delay processing on the plurality of optical components obtained by the optical beam splitter by using beam splitting processing; a mode division multiplexer, configured to perform mode conversion on the plurality of optical components obtained by the optical delay unit by using delay processing, to obtain a plurality of optical components, where any two of the plurality of optical components obtained by using mode conversion are corresponding to different guided wave modes, and the mode division multiplexer is further configured to superimpose the plurality of optical components obtained by using mode conversion, to obtain a superimposed optical signal; and a photodiode detector, configured to convert the superimposed optical signal obtained by the mode division multiplexer by using superimposition into a current signal.

With reference to the first aspect, in an implementation of the first aspect, the mode division multiplexer is specifically configured to convert the plurality of optical components obtained by the optical delay unit by using delay processing into optical components with different transverse electric TE modes.

With reference to either the first aspect or the foregoing implementation of the first aspect, in another implementation of the first aspect, the apparatus further includes an optical switch, configured to: receive the plurality of optical components obtained by the optical delay unit by using delay processing, and choose a first-type output port or a second-type output port of the optical switch to output the plurality of optical components; and the mode division multiplexer is specifically configured to: perform mode conversion on optical components output from the first-type output port of the optical switch, and superimpose mode conversion results to obtain a first superimposed optical signal; and perform mode conversion on optical components output from the second-type output port of the optical switch, and superimpose mode conversion results to obtain a second superimposed optical signal.

With reference to any one of the first aspect or the foregoing implementations of the first aspect, in another implementation of the first aspect, the photodiode detector is specifically configured to: convert the first superimposed optical signal output from the mode division multiplexer into a first current signal; convert the second superimposed optical signal output from the mode division multiplexer into a second current signal; and superimpose the first current signal and the second current signal to obtain a superimposed current signal.

With reference to any one of the first aspect or the foregoing implementations of the first aspect, in another implementation of the first aspect, the optical signal is an optical signal with a plurality of wavelengths, and the apparatus further includes: a wavelength division demultiplexer, configured to perform wavelength division processing on the superimposed optical signal output from the mode division multiplexer, to obtain a plurality of superimposed optical signals, where any two of the plurality of superimposed optical signals have different wavelengths; and the photodiode detector is specifically configured to convert the plurality of superimposed optical signals output from the wavelength division demultiplexer into a plurality of current signals.

With reference to any one of the first aspect or the foregoing implementations of the first aspect, in another implementation of the first aspect, the apparatus is an optical equalizer or a photodiode hybrid equalizer.

With reference to any one of the first aspect or the foregoing implementations of the first aspect, in another implementation of the first aspect, the mode division multiplexer is a mode division multiplexer based on an asymmetric DC coupler, a Y branch, or a multimode interference coupler (multimode interference coupler, MMI coupler).

With reference to any one of the first aspect or the foregoing implementations of the first aspect, in another implementation of the first aspect, the optical beam splitter may be an optical beam splitter based on cascaded Mach-Zehnder interferometers.

According to a second aspect, a method for processing an optical signal is provided, including: performing beam splitting processing on the optical signal to obtain a plurality of optical components; performing delay processing on the plurality of optical components; performing mode conversion on the plurality of optical components obtained by using delay processing, to obtain a plurality of optical components, where any two of the plurality of optical components obtained by using mode conversion are corresponding to different guided wave modes; superimposing the plurality of optical components obtained by using mode conversion, to obtain a superimposed optical signal; and converting the superimposed optical signal into a current signal.

With reference to the second aspect, in an implementation of the second aspect, the performing mode conversion on the plurality of optical components obtained by using delay processing includes: converting the plurality of optical components obtained by using delay processing into optical components with different transverse electric TE modes.

With reference to either the second aspect or the foregoing implementation of the second aspect, in another implementation of the second aspect, before the performing mode conversion on the plurality of optical components obtained by using delay processing, the method further includes:
receiving the plurality of optical components obtained by using delay processing, and choosing a first-type output port or a second-type output port of an optical switch to output the plurality of optical components obtained by using delay processing; and the performing mode conversion on the plurality of optical components obtained by using delay processing includes: performing mode conversion on optical components output from the first-type output port of the optical switch, and superimposing mode conversion results to obtain a first superimposed optical signal; and performing mode conversion on optical components output from the second-type output port of the optical switch, and superimposing mode conversion results to obtain a second superimposed optical signal.

With reference to any one of the second aspect or the foregoing implementations of the second aspect, in another implementation of the second aspect, the converting the superimposed optical signal into a current signal includes: converting the first superimposed optical signal into a first current signal; converting the second superimposed optical signal into a second current signal; and superimposing the first current signal and the second current signal to obtain a superimposed current signal.

With reference to any one of the second aspect or the foregoing implementations of the second aspect, in another implementation of the second aspect, the optical signal is an optical signal with a plurality of wavelengths, and before the converting the superimposed optical signal into a current signal, the method further includes: performing wavelength division processing on the superimposed optical signals to obtain a plurality of superimposed optical signals, where any two of the plurality of superimposed optical signals have different wavelengths; and the converting the superimposed optical signal into a current signal includes: converting the plurality of superimposed optical signals into a plurality of current signals.

In the embodiments of the present invention, the mode division multiplexer performs mode conversion on the plurality of optical components to obtain the plurality of optical components corresponding to different guided wave modes. In this way, the plurality of optical components can be incoherently superimposed in an optical domain, and therefore the optical signal is compensated or equalized in the optical domain. In addition, a quantity of optical components is reduced by superimposing the plurality of optical components, and therefore a quantity of photodiode detectors is reduced.

### BRIEF DESCRIPTION OF DRAWINGS

FIG. 1 is a schematic diagram of a feed forward equalizer in the prior art;
FIG. 2 is a schematic diagram of a finite impulse response filter based on a tapped delay line;
FIG. 3 is a schematic block diagram of an apparatus for processing an optical signal according to an embodiment of the present invention;
FIG. 4 is a schematic structural diagram of a 1:3 adjustable optical beam splitter based on cascaded Mach-Zehnder interferometers;
FIG. 5 is a schematic structural diagram of a mode division multiplexer according to an embodiment of the present invention;
FIG. 6 is a schematic block diagram of an apparatus for processing an optical signal according to an embodiment of the present invention;
FIG. 7 is a schematic block diagram of an apparatus for processing an optical signal according to an embodiment of the present invention; and
FIG. 8 is a schematic flowchart of a method for processing an optical signal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

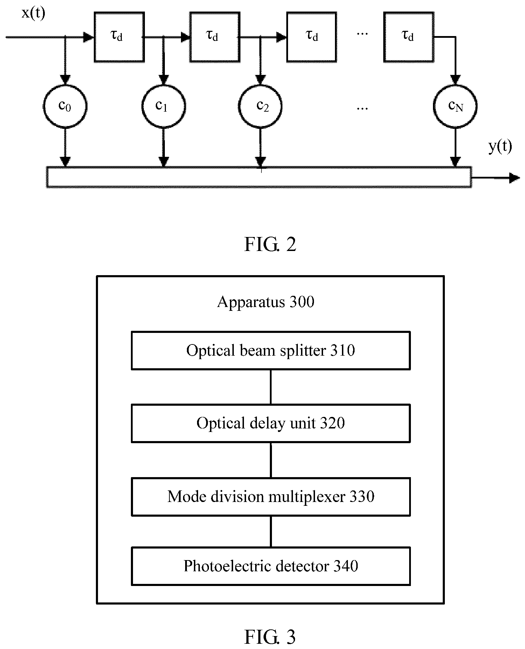

For ease of understanding, how to equalize or compensate an optical signal is briefly described with reference to FIG. 2. FIG. 2 is a schematic diagram of a finite impulse response (FIR) filter based on a tapped delay line. The tapped delay line is a quite classical structure, and the tapped delay line may be used to cancel intersymbol interference (ISI) generated due to various sources in an optical signal, for example, chromatic dispersion in an optical fiber, polarization mode dispersion, or a narrowband effect of an optical filter. In FIG. 2, the FIR filter includes N (an integer greater than or equal to 1) delay units and (N+1) gain elements. An input signal x(t) sequentially passes through the N same delay units, and (N+1) taps including a tap before each delay unit and a tap after a last delay unit pass through the gain elements and are superimposed and output to finally obtain an output signal y(t). Specifically, y(t)=c₀x(t)+c₁x(t-τ_{d})+c₂x(t-2τ_{d})+...+c_{N}x(t-Nτ_{d}). The value τ_{d} of the delay unit is related to an element rate. During actual application, a gain of each component may be repeatedly adjusted, and an eye pattern of the signal y(t) output by the FIR filter is observed by using an oscilloscope. When the eye pattern of y(t) is open to the largest extent, setting of the gain of each component is completed. In this case, the filter best compensates the input signal x(t). During actual application, to equalize or compensate an optical signal, the optical signal is usually converted into an electrical signal first, the electrical signal is then compensated or equalized by using the FIR filter, and then the electrical signal is converted into an optical signal. In this case, the obtained optical signal is an optical signal obtained after compensation or equalization processing. In an actual process, an optical signal is often first converted into an electrical signal before other processing is performed. Therefore, after the electrical signal converted from the optical signal is compensated or equalized by using the FIR filter, the electrical signal may not be further converted into an optical signal, and instead, other subsequent processing may be directly performed on the electrical signal. In this way, the optical signal is indirectly compensated or equalized by using the FIR filter.

FIG. 3 is a schematic block diagram of an apparatus for processing an optical signal according to an embodiment of the present invention. The apparatus 300 in FIG. 3 includes an optical beam splitter 310, an optical delay unit 320, a mode division multiplexer 330, and a photodiode detector 340.

The optical beam splitter 310 is configured to perform beam splitting processing on a received optical signal to obtain a plurality of optical components.

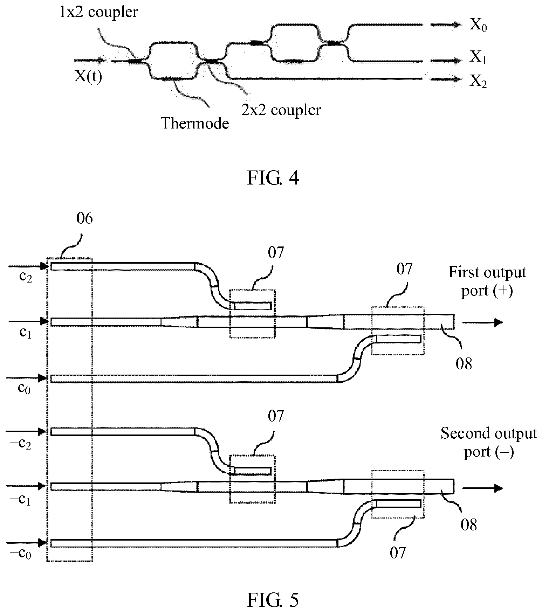

The optical beam splitter 310 may split an optical signal into a plurality of optical components according to a requirement. The optical beam splitter 310 may control a size of each optical component during beam splitting. The optical beam splitter herein may be an optical beam splitter based on cascaded Mach-Zehnder interferometers. For example, when the optical beam splitter splits an optical signal X(t) into three optical components X₀, X₁, and X₂, a possible structure of the optical beam splitter is shown in FIG. 4. The beam splitter includes two cascaded Mach-Zehnder interferometers. The beam splitter has two thermodes, one 1x2 coupler, and two 2x2 couplers in total. Sizes of the three to-be-output optical components X₀, X₁, and X₂ may be adjusted by adjusting voltages on the thermodes.

The optical delay unit 320 is configured to perform delay processing on the plurality of optical components obtained by the optical beam splitter by using beam splitting processing.

The optical delay unit 320 is an important part for compensating or equalizing an optical signal. The optical delay unit 320 may include a tapped delay line, and the tapped delay line may be used to cancel ISI generated due to various sources in an optical signal, for example, chromatic dispersion in an optical fiber, polarization mode dispersion, or a narrowband effect of an optical filter. Generally, the optical delay unit 320 delays optical components for different time. The optical delay unit 320 may adjust a phase of each optical component by using delay processing. In this way, the optical signal can be equalized or compensated by combining or superimposing optical components obtained by using delay processing. The optical delay unit herein may include a waveguide of a specific length.

The mode division multiplexer 330 is configured to perform mode conversion on the plurality of optical components obtained by the optical delay unit by using delay processing, to obtain a plurality of optical components, where any two of the plurality of optical components obtained by using mode conversion are corresponding to different guided wave modes.

The mode division multiplexer 330 is further configured to superimpose the plurality of optical components obtained by using mode conversion, to obtain a superimposed optical signal.

It should be understood that mode conversion is performed on each of the plurality of optical components. Because the plurality of optical components obtained by using mode conversion are corresponding to different guided wave modes, the plurality of optical components are incoherently superimposed. In this way, the plurality of optical components can be superimposed in an optical domain after mode conversion is performed on the plurality of optical components, instead of being converted into electrical signals before superimposition is performed. Therefore, the optical signal can be equalized or compensated in the optical domain.

Optionally, the mode division multiplexer may further convert the plurality of optical components into optical components with different transverse electric (Transverse Electric, TE) modes. It should be understood that any two of the plurality of optical components obtained by using mode conversion herein are corresponding to different TE modes. For example, when there are three optical components c₀, c₁, and c₂, after the mode division multiplexer converts the three optical components, the three optical components c₀, c₁, and c₂ are respectively corresponding to a TEO mode, a TE1 mode, and a TE2 mode. In this case, the three optical components may be incoherently superimposed to obtain a superimposed optical signal.

The mode division multiplexer may alternatively convert the plurality of optical components into optical components in a TM mode provided that it is ensured that different optical components in a same output waveguide are corresponding to different guided wave modes.

The mode division multiplexer may be implemented based on an asymmetric DC coupler, a Y branch, or a multimode interference coupler (MMI coupler, multimode interference coupler).

To facilitate understanding of a process of performing mode conversion on the optical component by the mode division multiplexer, how the mode division multiplexer converts the plurality of optical components into optical components in different modes is briefly described below with reference to FIG. 5. A double output mode division multiplexer shown in FIG. 5 includes two 3:1 mode division multiplexers. It should be understood that FIG. 5 merely shows a possible structure of the double output mode division multiplexer. Each 3:1 mode division multiplexer includes three input ports (06), two asymmetric couplers (07), and one output port (08). Assuming that three optical components X₀, X₁, and X₂ are respectively input into the mode division multiplexer from input ports c₀, c₁, and c₂, all the three optical components are input in a fundamental TE mode (TEO) of a waveguide at the input port. After passing through the asymmetric DC coupler (07), the optical component X₂ is converted from the TEO mode to a TE1 mode, the optical component X₀ is converted from the TEO mode to a TE2 mode, and the optical component X₁ is always transmitted in the TEO mode. At the output port (08), the different optical components in different modes are incoherently superimposed. Likewise, the other 3:1 mode division multiplexer may also incoherently superimpose different optical components in different modes by using a similar method. In this way, different optical components are in different modes by using conversion by using the mode division multiplexer, so that the different optical components can be incoherently superimposed.

It should be understood that the mode division multiplexer may include a first main waveguide and a second main waveguide. The first main waveguide is used to perform mode conversion on an optical component received from a first-type output port of an optical switch, and the second main waveguide is used to perform mode conversion on an optical component received from a second-type output port of the optical switch. To ensure that optical components output from these two output ports are converted into optical components in different guided wave modes, a quantity of guided wave modes in the first main waveguide should be greater than or equal to a quantity of optical components received from the first-type output port of the optical switch, and likewise, a quantity of guided wave modes in the second main waveguide should be greater than or equal to a quantity of optical components received from the second-type output port of the optical switch.

The photodiode detector 340 is configured to convert the superimposed optical signal obtained by the mode division multiplexer by using superimposition into a current signal.

The photodiode detector is configured to convert the superimposed optical signal into the current signal, to equalize or compensate the optical signal. In addition, in a process of processing an optical signal, the optical signal is often converted into an electrical signal for further processing. Therefore, herein the optical signal is converted into the current signal, so that other processing can be performed on the current signal.

It should be understood that in the apparatus shown in FIG. 3, the optical delay unit 320 performs delay processing on the optical components, and then the mode division multiplexer 330 performs mode conversion on the optical components, so that the optical components are incoherently superimposed. In this way, the optical signal is partially equalized or compensated in the optical domain.

In this embodiment of the present invention, the mode division multiplexer performs mode conversion on the plurality of optical components to obtain the plurality of optical components in different modes. In this way, the plurality of optical components can be incoherently superimposed in the optical domain, and therefore the optical signal is compensated or equalized in the optical domain. In addition, a quantity of optical components is reduced by superimposing the plurality of optical components, and therefore a quantity of photodiode detectors is reduced.

Optionally, in an embodiment, the apparatus for processing an optical signal may further include an optical switch 350. The optical switch 350 includes a first-type output port and a second-type output port. Each of the two types of output ports is connected to an input port of the mode division multiplexer. The optical switch 350 is configured to: receive, from the optical delay unit, the plurality of optical components obtained by using delay processing, and choose the first-type output port or the second-type output port to input the plurality of optical components into the mode division multiplexer.

When the apparatus for processing an optical signal includes the optical switch 350, the mode division multiplexer is specifically configured to: receive the plurality of optical components from the first-type output port and the second-type output port of the optical switch 350; perform mode conversion on optical components output from the first-type output port of the optical switch 350, and superimpose mode conversion results to obtain a first superimposed optical signal; and perform mode conversion on optical components output from the second-type output port of the optical switch 350, and superimpose mode conversion results to obtain a second superimposed optical signal.

A symbol of the first-type output port may be positive, and a symbol of the second-type output port may be negative. The mode division multiplexer separately superimposes the optical components output from the two types of output ports, to obtain the first superimposed optical signal and the second superimposed optical signal. A symbol of the first superimposed optical signal is positive, and a symbol of the second superimposed optical signal is negative. The "symbol" herein means that a symbol of a current signal converted from a superimposed signal whose symbol is positive is also positive, and a symbol of a current signal converted from a superimposed signal whose symbol is negative is also negative. The plurality of optical components are separately processed by using the first-type output port and the second-type output port, so that different equalization or compensation operations can be used for the plurality of optical components.

When the mode division multiplexer outputs two superimposed signals: the first superimposed optical signal and the second superimposed optical signal, the photodiode detector is specifically configured to: convert the first superimposed optical signal into a first current signal, convert the second superimposed optical signal into a second current signal, and then superimpose the first current signal and the second current signal to obtain a superimposed current signal. A symbol of the first current signal is positive, and a symbol of the second current signal is negative. In this way, superimposing the first current signal and the second current signal is equivalent to obtaining a current signal by calculating a difference between a current value of the first current signal and a current value of the second current signal.

Optionally, in an embodiment, when the optical signal is an optical signal with a plurality of wavelengths, the apparatus 300 for processing an optical signal further includes a wavelength division demultiplexer 360. An input port of the wavelength division demultiplexer 360 is connected to an output port of the mode division multiplexer. The wavelength division demultiplexer is configured to: receive the superimposed optical signal output from the mode division multiplexer, and perform wavelength division processing on the superimposed optical signals to obtain a plurality of superimposed optical signals. Any two of the plurality of superimposed optical signals have different wavelengths. That is, during wavelength processing, the superimposed optical signals are distinguished according to different wavelengths, so that optical signals of a same wavelength are grouped together, and optical signals of different wavelengths are separated. In this case, the photodiode detector is configured to: receive the superimposed optical signals of a plurality of wavelengths, separately convert optical signals of a same wavelength into current signals, and output the current signals. In a specific case of this embodiment, when the plurality of optical components are optical signals of two wavelengths, two wavelength division demultiplexers are required. Each wavelength division demultiplexer classifies received superimposed optical signals into two types according to different wavelengths, and then separately sends the two types of optical components of different wavelengths to corresponding photodiode detectors for processing.

Optionally, in an embodiment, the apparatus for processing an optical signal may be an optical equalizer or a photodiode hybrid equalizer. It should be understood that the optical equalizer herein may convert an optical signal into an electrical signal after equalizing or compensating the optical signal, so that another apparatus further processes the electrical signal. However, the photodiode hybrid equalizer not only can compensate or equalize an optical signal in the optical domain, but also can convert the optical signal into an electrical signal after equalizing or compensating the optical signal, and perform further processing on the electrical signal.

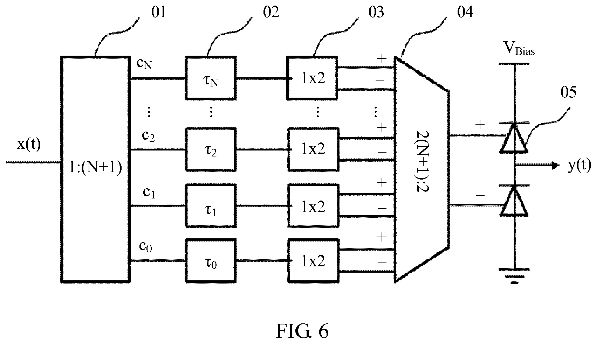

FIG. 6 is a schematic block diagram of an apparatus for processing an optical signal according to an embodiment of the present invention. The apparatus may be configured to process an optical signal of a single wavelength. As shown in FIG. 6, the apparatus includes an adjustable optical beam splitter (01), an optical delay unit (02), a 1x2 optical switch (03), a double output mode division multiplexer (04), and a photodiode detector (05). There are (N+1) optical delay units and optical switches, where N is an integer greater than or equal to 0. Each output port of the adjustable optical beam splitter (01) is connected to an input port of the optical delay unit (02). An output port of each optical delay unit (02) is connected to an input port of one 1x2 optical switch (03). Each 1x2 optical switch (03) has two output ports: a positive output port and a negative output port. Each of the two ports is connected to an input port of the double output mode division multiplexer (04). Two output ports of the double output mode division multiplexer (04) are respectively connected to two photodiode detectors (05). It should be understood that the positive output port herein is equivalent to the foregoing first-type output port of the optical switch, and the negative output port is equivalent to the foregoing second-type output port of the optical switch.

A process of processing an optical signal by the apparatus is as follows: The adjustable optical beam splitter (01) receives an optical signal X(t), and then performs beam splitting processing on the optical signal X(t) to obtain (N+1) optical components. The optical components are X₀, X₁, X₂, ..., and X_{N}, where N is an integer greater than or equal to 0. Sizes of these optical components may be determined by the optical beam splitter during beam splitting, and a size of each optical component may be adjusted according to an actual case during beam splitting. Then the optical delay unit (02) separately performs delay processing on the (N+1) optical components, (N+1) optical components obtained by using delay processing respectively enter optical switches, and each optical switch (03) needs to choose a positive output port or a negative output port to output a received optical component to the double output mode division multiplexer (04). The double output mode division multiplexer (04) classifies received optical components into two groups, where a first group of optical components are optical components output from positive output ports of the optical switches (03), and a second group of optical components are optical components output from negative output ports of the optical switches (03); performs mode conversion on the first group of optical components in a first output waveguide, and outputs a first optical signal after superimposition; and performs mode conversion on the second group of optical components in a second output waveguide, and outputs a second optical signal after superimposition. The photodiode detector (05) receives the first optical signal and the second optical signal output from the double output mode division multiplexer (04), and respectively converts the first optical signal and the second optical signal into a first current signal and a second current signal. Because one photodiode detector is grounded, and a bias voltage V_{bias} is applied to the other photodiode detector in the figure, a symbol of the first current signal is positive, and a symbol of the second current signal is negative. Finally, the first current signal and the second current signal are superimposed to obtain a superimposed current signal, and the superimposed current signal is output. In this way, the optical delay unit performs delay processing on the optical components, the optical signals obtained by using delay processing are superimposed, and the optical signal obtained by using superimposition is converted into an current signal. In the entire process, the optical signal is equalized or compensated, and the optical signal is converted into the electrical signal, so that the optical signal is further processed.

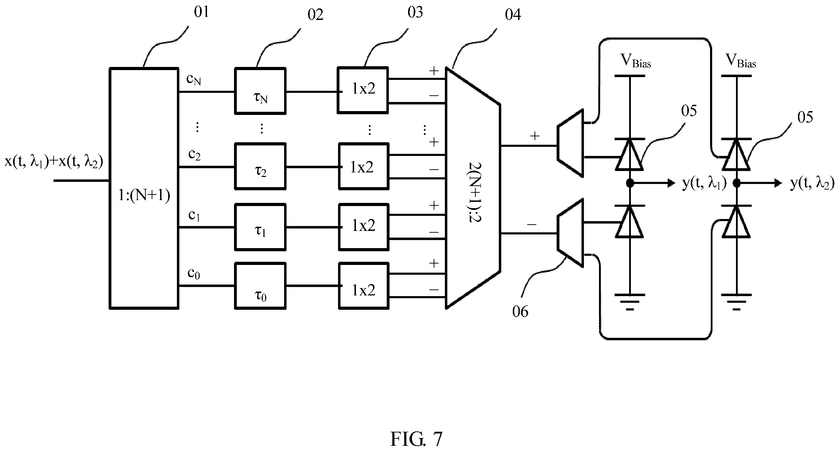

FIG. 7 is a schematic block diagram of an apparatus for processing an optical signal according to an embodiment of the present invention. The apparatus is a parallel optical equalizer based on a double output mode division multiplexer. The parallel equalizer may be configured to process optical signals of two wavelengths. As shown in FIG. 7, to-be-processed optical signals are x(t, λ₁) and x(t, λ₂). On the basis of FIG. 4, one pair of photodiode detectors (05) connected in series and two wavelength division demultiplexers (06) are added to the parallel equalizer. A process before x(t, λ₁) and x(t, λ₂) enter the wavelength division demultiplexers (06) is consistent with a process of processing an optical signal by the equalizer shown in FIG. 4. x(t, λ₁) and x(t, λ₂) are processed in parallel by the parallel equalizer without affecting each other, and are respectively received by corresponding photodiode detectors after the wavelength division demultiplexers (06) perform wavelength division. An optical signal of a wavelength λ₁ enters one pair of photodiode detectors, and an optical signal of a wavelength λ₂ enters the other pair of photodiode detectors. It should be understood that with an increase of types of wavelengths of optical signals, a quantity of output ports of the wavelength division demultiplexer also needs to increase accordingly, and a quantity of photodiode detectors also needs to increase accordingly. That is, if optical signals have M wavelengths, the wavelength division demultiplexer has M output ports, and there are 2M photodiode detectors, where M is an integer greater than or equal to 1. In addition, photodiode detectors corresponding to different wavelengths are independent of each other, and exert no impact on a working rate of the optical equalizer. It should be understood that for an equalizer that processes optical signals of M wavelengths, 2M photodiode detectors are required, whereas for an equalizer that processes an optical signal of a single wavelength, only two photodiode detectors are required.

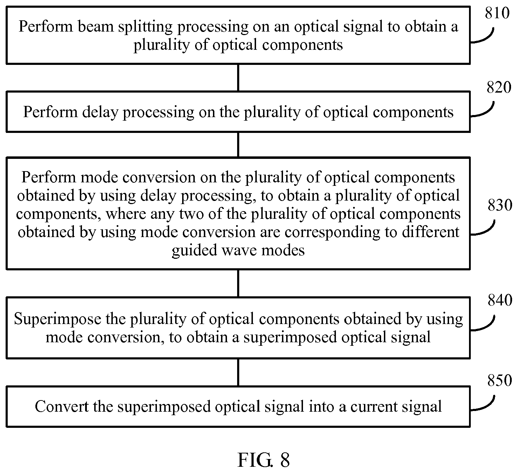

With reference to FIG. 3 to FIG. 7, the apparatus for processing an optical signal according to the embodiments of the present invention is described in detail above. With reference to FIG. 8, a method for processing an optical signal according to an embodiment of the present invention is described below. It should be understood that in the method for processing an optical signal described in FIG. 8, the apparatus for processing an optical signal described in FIG. 3 to FIG. 7 can be used to process an optical signal. For brevity, repeated descriptions are appropriately omitted.

FIG. 8 is a schematic flowchart of a method for processing an optical signal according to an embodiment of the present invention. The method may be executed by a corresponding apparatus for processing an optical signal in FIG. 3 to FIG. 7. The method in FIG. 8 includes:
810. Perform beam splitting processing on the optical signal to obtain a plurality of optical components.
820. Perform delay processing on the plurality of optical components.
830. Perform mode conversion on a plurality of optical components obtained by using delay processing, to obtain a plurality of optical components, where any two of the plurality of optical components obtained by using mode conversion are corresponding to different guided wave modes.
840. Superimpose the plurality of optical components obtained by using mode conversion, to obtain a superimposed optical signal.
850. Convert the superimposed optical signal into a current signal.

In this embodiment of the present invention, a mode division multiplexer performs mode conversion on the plurality of optical components to obtain the plurality of optical components corresponding to different guided wave modes. In this way, the plurality of optical components can be incoherently superimposed in an optical domain, and therefore the optical signal is compensated or equalized in the optical domain. In addition, a quantity of optical components is reduced by superimposing the plurality of optical components, and therefore a quantity of photodiode detectors is reduced.

Optionally, in an embodiment, the performing mode conversion on the plurality of optical components obtained by using delay processing includes: converting the plurality of optical components obtained by using delay processing into optical components with different TE modes.

Optionally, in an embodiment, before the performing mode conversion on the plurality of optical components obtained by using delay processing, the method further includes: receiving the plurality of optical components obtained by using delay processing, and choosing a first-type output port or a second-type output port of an optical switch to output the plurality of optical components obtained by using delay processing; and the performing mode conversion on the plurality of optical components obtained by using delay processing includes: performing mode conversion on optical components output from the first-type output port of the optical switch, and superimposing mode conversion results to obtain a first superimposed optical signal; and performing mode conversion on optical components output from the second-type output port of the optical switch, and superimposing mode conversion results to obtain a second superimposed optical signal.

Optionally, in an embodiment, the converting the superimposed optical signal into a current signal includes: converting the first superimposed optical signal into a first current signal; converting the second superimposed optical signal into a second current signal; and superimposing the first current signal and the second current signal to obtain a superimposed current signal.

Optionally, in an embodiment, the optical signal is an optical signal with a plurality of wavelengths. Before the converting the superimposed optical signal into a current signal, the method further includes: performing wavelength division processing on the superimposed optical signals to obtain a plurality of superimposed optical signals, where any two of the plurality of superimposed optical signals have different wavelengths; and the converting the superimposed optical signal into a current signal includes: converting the plurality of superimposed optical signals into a plurality of current signals.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An apparatus (300) for processing an optical signal, comprising:
an optical beam splitter (310), configured to perform beam splitting processing on the optical signal to obtain a plurality of optical components;
an optical delay unit (320), configured to perform delay processing on the plurality of optical components obtained by the optical beam splitter by using beam splitting processing;
a mode division multiplexer (330), configured to perform mode conversion on the plurality of optical components obtained by the optical delay unit by using delay processing, to obtain a plurality of optical components, wherein any two of the plurality of optical components obtained by using mode conversion are corresponding to different guided wave modes; wherein
the mode division multiplexer (330) is further configured to superimpose the plurality of optical components obtained by using mode conversion, to obtain a superimposed optical signal; and
a photodiode detector (340), configured to convert the superimposed optical signal obtained by the mode division multiplexer by using superimposition into a current signal.

2. The apparatus according to claim 1, wherein the mode division multiplexer (330) is specifically configured to:
convert the plurality of optical components obtained by the optical delay unit by using delay processing into optical components with different transverse electric, TE, modes.

3. The apparatus according to claim 1 or 2, wherein the apparatus (300) further comprises:
an optical switch, configured to: receive the plurality of optical components obtained by the optical delay unit by using delay processing, and choose a first-type output port or a second-type output port of the optical switch to output the plurality of optical components; and
the mode division multiplexer is specifically configured to:
perform mode conversion on optical components output from the first-type output port of the optical switch, and superimpose mode conversion results to obtain a first superimposed optical signal; and
perform mode conversion on optical components output from the second-type output port of the optical switch, and superimpose mode conversion results to obtain a second superimposed optical signal.

4. The apparatus according to claim 3, wherein the photodiode detector is specifically configured to:
convert the first superimposed optical signal output from the mode division multiplexer into a first current signal;
convert the second superimposed optical signal output from the mode division multiplexer into a second current signal; and
superimpose the first current signal and the second current signal to obtain a superimposed current signal.

5. The apparatus according to any one of claims 1 to 4, wherein the optical signal is an optical signal with a plurality of wavelengths, and the apparatus further comprises:
a wavelength division demultiplexer, configured to perform wavelength division processing on the superimposed optical signal output from the mode division multiplexer, to obtain a plurality of superimposed optical signals, wherein any two of the plurality of superimposed optical signals have different wavelengths; and
the photodiode detector is specifically configured to:
convert the plurality of superimposed optical signals output from the wavelength division demultiplexer into a plurality of current signals.

6. The apparatus according to any one of claims 1 to 5, wherein the apparatus is an optical equalizer or a photodiode hybrid equalizer.

7. A method for processing an optical signal, comprising:
performing beam splitting processing on the optical signal to obtain a plurality of optical components;
performing delay processing on the plurality of optical components;
performing mode conversion on the plurality of optical components obtained by using delay processing, to obtain a plurality of optical components, wherein any two of the plurality of optical components obtained by using mode conversion are corresponding to different guided wave modes;
superimposing the plurality of optical components obtained by using mode conversion, to obtain a superimposed optical signal; and
converting the superimposed optical signal into a current signal.

8. The method according to claim 7, wherein the performing mode conversion on the plurality of optical components obtained by using delay processing comprises:
converting the plurality of optical components obtained by using delay processing into optical components with different transverse electric, TE, modes.

9. The method according to claim 7 or 8, wherein before the performing mode conversion on the plurality of optical components obtained by using delay processing, the method further comprises:
receiving the plurality of optical components obtained by using delay processing, and choosing a first-type output port or a second-type output port of an optical switch to output the plurality of optical components obtained by using delay processing; and
the performing mode conversion on the plurality of optical components obtained by using delay processing comprises:
performing mode conversion on optical components output from the first-type output port of the optical switch, and superimposing mode conversion results to obtain a first superimposed optical signal; and
performing mode conversion on optical components output from the second-type output port of the optical switch, and superimposing mode conversion results to obtain a second superimposed optical signal.

10. The method according to claim 9, wherein the converting the superimposed optical signal into a current signal comprises:
converting the first superimposed optical signal into a first current signal;
converting the second superimposed optical signal into a second current signal; and
superimposing the first current signal and the second current signal to obtain a superimposed current signal.

11. The method according to any one of claims 7 to 10, wherein the optical signal is an optical signal with a plurality of wavelengths, and before the converting the superimposed optical signal into a current signal, the method further comprises:
performing wavelength division processing on the superimposed optical signals to obtain a plurality of superimposed optical signals, wherein any two of the plurality of superimposed optical signals have different wavelengths; and
the converting the superimposed optical signal into a current signal comprises:
converting the plurality of superimposed optical signals into a plurality of current signals.

## Patentansprüche

1. Einrichtung (300) zum Verarbeiten eines optischen Signals, umfassend:
einen optischen Strahlteiler (310), der konfiguriert ist, um eine Strahlteilungsverarbeiten des optischen Signals durchzuführen, um eine Vielzahl von optischen Komponenten zu erhalten;
eine optische Verzögerungseinheit (320), die konfiguriert ist, um eine Verzögerungsverarbeitung der Vielzahl von optischen Komponenten durchzuführen, die unter Verwendung der Strahlteilungsverarbeitung durch den optischen Strahlteiler erhalten wurden;
einen Modusteilungsmultiplexer (330), der konfiguriert ist, um eine Modusumwandlung der Vielzahl von optischen Komponenten durchzuführen, die unter Verwendung der Verzögerungsverarbeitung durch die optische Verzögerungseinheit erhalten wurden, um eine Vielzahl von optischen Komponenten zu erhalten, wobei beliebige zwei der Vielzahl von optischen Komponenten, die unter Verwendung der Modusumwandlung erhalten wurden, verschiedenen geführten Wellenmodi entsprechen; wobei der Modusteilungsmultiplexer (330) ferner konfiguriert ist, um die Vielzahl von optischen Komponenten, die unter Verwendung der Modusumwandlung erhalten wurden, zu überlagern, um ein überlagertes optisches Signal zu erhalten; und
einen Photodiodendetektor (340), der konfiguriert ist, um das überlagerte optische Signal, das unter Verwendung der Überlagerung durch den Modusteilungsmultiplexer erhalten wurde, in ein Stromsignal umzuwandeln.

2. Einrichtung nach Anspruch 1, wobei der Modusteilungsmultiplexer (330) insbesondere zu Folgendem konfiguriert ist:
Umwandeln der Vielzahl von optischen Komponenten, die unter Verwendung der Verzögerungsverarbeitung durch die optische Verzögerungseinheit erhalten wurden, mit verschiedenen transversen elektrischen (TE-)Modi.

3. Einrichtung nach Anspruch 1 oder 2, wobei die Einrichtung (300) ferner Folgendes umfasst:
einen optischen Schalter, der zu Folgendem konfiguriert ist:
Empfangen der Vielzahl von optischen Komponenten, die unter Verwendung der Verzögerungsverarbeitung durch die optische Verzögerungseinheit erhalten wurden, und Auswählen eines Ausgabeanschlusses eines ersten Typs oder eines Ausgabeanschlusses eines zweiten Typs des optischen Schalters, um die Vielzahl von optischen Komponenten auszugeben; und
wobei der Modusteilungsmultiplexer insbesondere zu Folgendem konfiguriert ist:
Durchführen einer Modusumwandlung von optischen Komponenten, die von dem Ausgabeanschluss des ersten Typs des optischen Schalters ausgegeben wurden, und Überlagern von Modusumwandlungsergebnissen, um ein erstes überlagertes optisches Signal zu erhalten; und
Durchführen einer Modusumwandlung von optischen Komponenten, die von dem Ausgabeanschluss des zweiten Typs des optischen Schalters ausgegeben wurden, um ein zweites überlagertes optisches Signal zu erhalten.

4. Einrichtung nach Anspruch 3, wobei der Photodiodendetektor insbesondere zu Folgendem konfiguriert ist:
Umwandeln des ersten überlagerten optischen Signals, das von dem Modusteilungsmultiplexer ausgegeben wurde, in ein erstes Stromsignal;
Umwandeln des zweiten überlagerten optischen Signals, das von dem Modusteilungsmultiplexer ausgegeben wurde, in ein zweites Stromsignal; und
Überlagern des ersten Stromsignals und des zweiten Stromsignals, um ein überlagertes Stromsignal zu erhalten.

5. Einrichtung nach einem der Ansprüche 1 bis 4, wobei das optische Signal ein optisches Signal mit einer Vielzahl von Wellenlängen ist und die Einrichtung ferner Folgendes umfasst:
einen Wellenlängenteilungsdemultiplexer, der konfiguriert ist, um eine Wellenlängenteilungsverarbeitung des überlagerten optischen Signals durchzuführen, das von dem Modusteilungsmultiplexer ausgegeben wurde, um eine Vielzahl von überlagerten optischen Signalen zu erhalten, wobei beliebige zwei der Vielzahl von überlagerten optischen Signalen verschiedene Wellenlängen aufweisen; und
wobei der Photodiodendetektor insbesondere zu Folgendem konfiguriert ist:
Umwandeln der Vielzahl von überlagerten optischen Signalen, die von dem Wellenlängenteilungsdemultiplexer ausgegeben wurden, in eine Vielzahl von Stromsignalen.

6. Einrichtung nach einem der Ansprüche 1 bis 5, wobei die Einrichtung ein optischer Entzerrer oder ein Photodiodenhybridentzerrer ist.

7. Verfahren zum Verarbeiten eines optischen Signals, umfassend:
Durchführen einer Strahlteilungsverarbeitung des optischen Signals, um eine Vielzahl von optischen Komponenten zu erhalten;
Durchführen einer Verzögerungsverarbeitung der Vielzahl von optischen Komponenten;
Durchführen einer Modusumwandlung der Vielzahl von optischen Komponenten, die unter Verwendung der Verzögerungsverarbeitung erhalten wurden, um eine Vielzahl von optischen Komponenten zu erhalten, wobei beliebige zwei der Vielzahl von optischen Komponenten, die unter Verwendung der Modusumwandlung erhalten wurden, verschiedenen geführten Wellenmodi entsprechen;
Überlagern der Vielzahl von optischen Komponenten, die unter Verwendung der Modusumwandlung erhalten wurden, um ein überlagertes optisches Signal zu erhalten; und
Umwandeln des überlagerten optischen Signals in ein Stromsignal.

8. Verfahren nach Anspruch 7, wobei das Durchführen der Modusumwandlung der Vielzahl von optischen Komponenten, die unter Verwendung der Verzögerungsverarbeitung erhalten wurden, Folgendes umfasst:
Umwandeln der Vielzahl von optischen Komponenten, die unter Verwendung der Verzögerungsverarbeitung erhalten wurden, in optische Komponenten mit verschiedenen transversen elektrischen (TE-) Modi.

9. Verfahren nach Anspruch 7 oder 8, wobei das Verfahren vor dem Durchführen der Modusumwandlung der Vielzahl von optischen Komponenten, die unter Verwendung der Verzögerungsverarbeitung erhalten wurden, ferner Folgendes umfasst:
Empfangen der Vielzahl von optischen Komponenten, die unter Verwendung der Verzögerungsverarbeitung erhalten wurden, und Auswählen eines Ausgabeanschlusses eines ersten Typs oder eines Ausgabeanschlusses eines zweiten Typs eines optischen Schalters, um die Vielzahl von optischen Komponenten auszugeben, die unter Verwendung der Verzögerungsverarbeitung erhalten wurden; und
wobei das Durchführen der Modusumwandlung der Vielzahl von optischen Komponenten, die unter Verwendung der Verzögerungsverarbeitung erhalten wurden, Folgendes umfasst:
Durchführen einer Modusumwandlung von optischen Komponenten, die von dem Ausgabeanschluss des ersten Typs des optischen Schalters ausgegeben wurden, und Überlagern von Modusumwandlungsergebnissen, um ein erstes überlagertes optisches Signal zu erhalten; und
Durchführen einer Modusumwandlung von optischen Komponenten, die von dem Ausgabeanschluss des zweiten Typs des optischen Schalters ausgegeben wurden, und Überlagern von Modusumwandlungsergebnissen, um ein zweites überlagertes optisches Signal zu erhalten.

10. Verfahren nach Anspruch 9, wobei das Umwandeln des überlagerten optischen Signals in ein Stromsignal Folgendes umfasst:
Umwandeln des ersten überlagerten optischen Signals in ein erstes Stromsignal;
Umwandeln des zweiten überlagerten optischen Signals in ein zweites Stromsignal; und
Überlagern des ersten Stromsignals und des zweiten Stromsignals, um ein überlagertes Stromsignal zu erhalten.

11. Verfahren nach einem der Ansprüche 7 bis 10, wobei das optische Signal ein optisches Signal mit einer Vielzahl von Wellenlängen ist und das Verfahren vor dem Umwandeln des überlagerten optischen Signals in ein Stromsignal ferner Folgendes umfasst:
Durchführen einer Wellenlängenteilungsverarbeitung der überlagerten optischen Signale, um eine Vielzahl von überlagerten optischen Signalen zu erhalten, wobei beliebige zwei der Vielzahl von überlagerten optischen Signalen verschiedene Wellenlängen aufweisen; und
wobei das Umwandeln des überlagerten optischen Signals in ein Stromsignal Folgendes umfasst:
Umwandeln der Vielzahl von überlagerten optischen Signalen in eine Vielzahl von Stromsignalen.

## Revendications

1. Appareil (300) pour traiter un signal optique, comprenant :
un séparateur de faisceau optique (310), conçu pour réaliser un traitement de séparation de faisceau sur le signal optique pour obtenir une pluralité de composantes optiques ;
une unité de retard optique (320), conçue pour réaliser un traitement de retard sur la pluralité de composantes optiques obtenues par le séparateur de faisceau optique en utilisant un traitement de séparation de faisceau ;
un multiplexeur par répartition en mode (330), conçu pour réaliser une conversion de mode sur la pluralité de composantes optiques obtenues par l'unité de retard optique en utilisant un traitement de retard, pour obtenir une pluralité de composantes optiques, dans lequel deux composantes quelconques de la pluralité de composantes optiques obtenues en utilisant une conversion de mode correspondent à des modes d'ondes guidées différents ; dans lequel
le multiplexeur par répartition en mode (330) est en outre conçu pour superposer la pluralité de composantes optiques obtenues en utilisant une conversion de mode, pour obtenir un signal optique superposé ; et
un détecteur à photodiode (340), conçu pour convertir le signal optique superposé obtenu par le multiplexeur par répartition en mode en utilisant une superposition en un signal de courant.

2. Appareil selon la revendication 1, dans lequel le multiplexeur par répartition en mode (330) est conçu spécifiquement pour :
convertir la pluralité de composantes optiques obtenues par l'unité de retard optique en utilisant un traitement de retard en composantes optiques avec des modes électriques transverses, TE, différents.

3. Appareil selon la revendication 1 ou 2, dans lequel l'appareil (300) comprend en outre :
un commutateur optique, conçu pour : recevoir la pluralité de composantes optiques obtenues par l'unité de retard optique en utilisant un traitement de retard, et choisir un port de sortie d'un premier type ou un port de sortie d'un second type du commutateur optique pour fournir en sortie la pluralité de composantes optiques ; et
le multiplexeur par répartition en mode est conçu spécifiquement pour :
réaliser une conversion de mode sur des composantes optiques fournies en sortie depuis le port de sortie du premier type du commutateur optique, et superposer des résultats de conversion de mode pour obtenir un premier signal optique superposé ; et
réaliser une conversion de mode sur des composantes optiques fournies en sortie depuis le port de sortie du second type du commutateur optique, et superposer des résultats de conversion de mode pour obtenir un second signal optique superposé.

4. Appareil selon la revendication 3, dans lequel le détecteur à photodiode est conçu spécifiquement pour :
convertir le premier signal optique superposé fourni en sortie depuis le multiplexeur par répartition en mode en un premier signal de courant ;
convertir le second signal optique superposé fourni en sortie depuis le multiplexeur par répartition en mode en un second signal de courant ; et
superposer le premier signal de courant et le second signal de courant pour obtenir un signal de courant superposé.

5. Appareil selon l'une quelconque des revendications 1 à 4, dans lequel le signal optique est un signal optique avec une pluralité de longueurs d'onde, et l'appareil comprend en outre :
un démultiplexeur par répartition en longueur d'onde, conçu pour réaliser un traitement de répartition en longueur d'onde sur le signal optique superposé fourni en sortie depuis le multiplexeur par répartition en mode, pour obtenir une pluralité de signaux optiques superposés, dans lequel deux signaux quelconques de la pluralité de signaux optiques superposés ont des longueurs d'onde différentes ; et
le détecteur à photodiode est conçu spécifiquement pour :
convertir la pluralité de signaux optiques superposés fournis en sortie depuis le démultiplexeur par répartition en longueur d'onde en une pluralité de signaux de courant.

6. Appareil selon l'une quelconque des revendications 1 à 5, dans lequel l'appareil est un égaliseur optique ou un égaliseur hybride à photodiode.

7. Procédé pour traiter un signal optique, comprenant :
la réalisation d'un traitement de séparation de faisceau sur le signal optique pour obtenir une pluralité de composantes optiques ;
la réalisation d'un traitement de retard sur la pluralité de composantes optiques ;
la réalisation d'une conversion de mode sur la pluralité de composantes optiques obtenues en utilisant un traitement de retard, pour obtenir une pluralité de composantes optiques, dans lequel deux composantes quelconques de la pluralité de composantes optiques obtenues en utilisant une conversion de mode correspondent à des modes d'ondes guidées différents ;
la superposition de la pluralité de composantes optiques obtenues en utilisant une conversion de mode, pour obtenir un signal optique superposé ; et
la conversion du signal optique superposé en un signal de courant.

8. Procédé selon la revendication 7, dans lequel la réalisation d'une conversion de mode sur la pluralité de composantes optiques obtenues en utilisant un traitement de retard comprend :
la conversion de la pluralité de composantes optiques obtenues en utilisant un traitement de retard en composantes optiques avec des modes électriques transverses, TE, différents.

9. Procédé selon la revendication 7 ou 8, dans lequel avant la réalisation d'une conversion de mode sur la pluralité de composantes optiques obtenues en utilisant un traitement de retard, le procédé comprend en outre :
la réception de la pluralité de composantes optiques obtenues en utilisant un traitement de retard, et le choix d'un port de sortie d'un premier type ou d'un port de sortie d'un second type d'un commutateur optique pour fournir en sortie la pluralité de composantes optiques obtenues en utilisant un traitement de retard ; et
la réalisation d'une conversion de mode sur la pluralité de composantes optiques obtenues en utilisant un traitement de retard comprend :
la réalisation d'une conversion de mode sur des composantes optiques fournies en sortie depuis le port de sortie du premier type du commutateur optique, et la superposition de résultats de conversion de mode pour obtenir un premier signal optique superposé ; et
la réalisation d'une conversion de mode sur des composantes optiques fournies en sortie depuis le port de sortie du second type du commutateur optique, et la superposition de résultats de conversion de mode pour obtenir un second signal optique superposé.

10. Procédé selon la revendication 9, dans lequel la conversion du signal optique superposé en un signal de courant comprend :
la conversion du premier signal optique superposé en un premier signal de courant ;
la conversion du second signal optique superposé en un second signal de courant ; et
la superposition du premier signal de courant et du second signal de courant pour obtenir un signal de courant superposé.

11. Procédé selon l'une quelconque des revendications 7 à 10, dans lequel le signal optique est un signal optique avec une pluralité de longueurs d'onde, et avant la conversion du signal optique superposé en un signal de courant, le procédé comprend en outre :
la réalisation d'un traitement de répartition en longueur d'onde sur les signaux optiques superposés pour obtenir une pluralité de signaux optiques superposés, dans lequel deux signaux quelconques de la pluralité de signaux optiques superposés ont des longueurs d'onde différentes ; et
la conversion du signal optique superposé en un signal de courant comprend :
la conversion de la pluralité de signaux optiques superposés en une pluralité de signaux de courant.
